# EUROPEAN PATENT APPLICATION

(11) **EP 0 637 126 A1**
(43) Date of publication of application: **01.02.1995**
(21) Application number: 93305882.8
(22) Date of filing: 26.07.1993
(51) Int. Cl.: H02P 7/34

(54) **Dynamic current feedback magnetizing type series or compound DC motor-generator control circuit (case II)**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The Application Case II relates to a subsequent design which is characterized in by that, the shunt or series winding of the motor-generator is further employed as an auxiliary exciting winding to replace the auxiliary winding in the former application case. It is aimed to economize the production cost and reduce the occupation of the winding inside the motor-generator chamber so as to promote its efficiency. With a control interface we may control output voltage or output impedance from the auxiliary generator for controlling output current and further selecting assisted magnetizing or differential magnetizing of aforesaid main motor-generator auxiliary field winding against the main field; the present dynamic current feedback magnetizing type series or compound DC motor-generator control circuit is also applicable to a generator or dynamo motor, which may replace expensive magnetic saturation amplifier or other complicated solid and dynamo switch loop to become an independent dynamo, endurable and reliable control system.

## Description

### SUMMARY OF THE INVENTION

The present dynamic current feedback magnetizing type shunt or series or compound DC motor-generator control circuit relates to a series or compound motor having auxiliary shunt field winding and including at least one current-follower type DC motor that is running at high or low speed subject to the amount of current passing by the armature for driving an auxiliary generator to constitute a feedback unit, and electric energy generated from such auxiliary generator is leading to the auxiliary field of the main motor-generator, and the type for magnetizing the auxiliary field of the main motor-generator includes assisted exciting with same polarity as the series field winding of the main motor-generator in which the general field is expanded in accordance with the main motor-generator armature current increasing, or differential magnetizing with different polarity as the series field winding of the main motor-generator in which the general field is being reduced in response to main motor-generator armature current increasing. The above design has been disclosed by the Applicant in British Patent Applcation No. 9205865.0 on March 18, 1992. The Application Case II relates to a subsequent design which is characterized in by that, the shunt or series winding of the motor-generator is further employed as an auxiliary exciting winding to replace the auxiliary winding in the former application case. It is aimed to economize the production cost and reduce the occupation of the winding inside the motor-generator chamber so as to promote its efficiency. With a control interface we may control output voltage or output impedance from the auxiliary generator for controlling output current and further selecting assisted magnetizing or differential magnetizing of aforesaid main motor-generator auxiliary field winding against the main field; the present dynamic current feedback magnetizing type series or compound DC motor-generator control circuit is also applicable to a generator or dynamo motor, which may replace expensive magnetic saturation amplifier or other complicated solid and dynamo switch loop to become an independent dynamo, endurable and reliable control system.

### BRIEF DESCRIPTION OF THE INVENTION

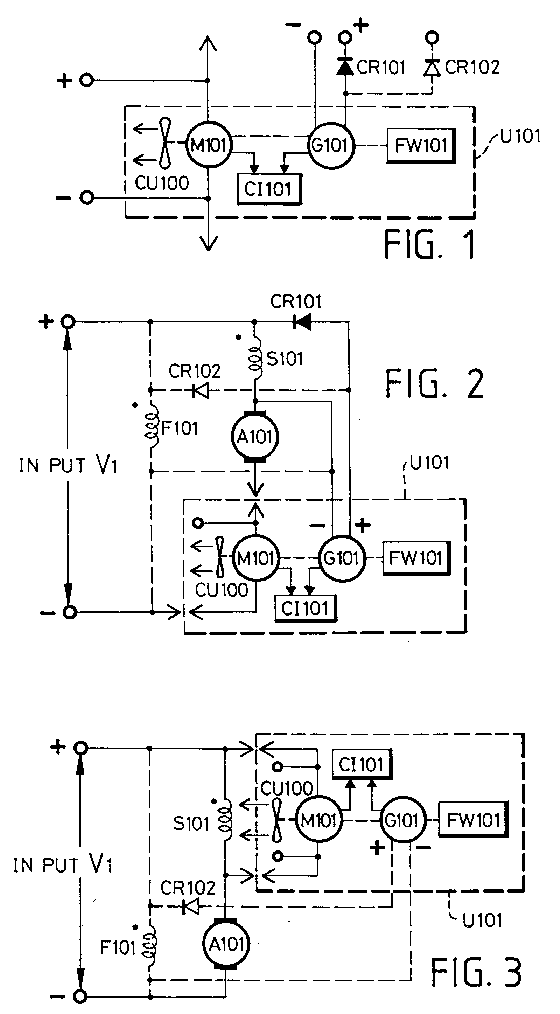

FIG. 1 is a diagramatic view showing the major elements of feedback unit of the present dynamic current feedback magnetizing type shunt or series or compound DC motor-generator control circuit.

FIG. 2 is a diagram showing an embodiment of circuit for the present dynamic current feedback magnetizing type shunt or series or compound DC motor-generator control circuit in which current-follower motor of feedback unit is series with armature using armature load current as the current for driving the motor.

FIG. 3 is a diagram showing an embodiment of circuit for the present dynamic current feedback magnetizing type shunt or series or compound DC motor-generator control circuit in which current-follower motor of feedback unit is parallel connected to the series winding of main motor and load current of main motor-generator forming voltage drop as the source of electric energy for driving the motor.

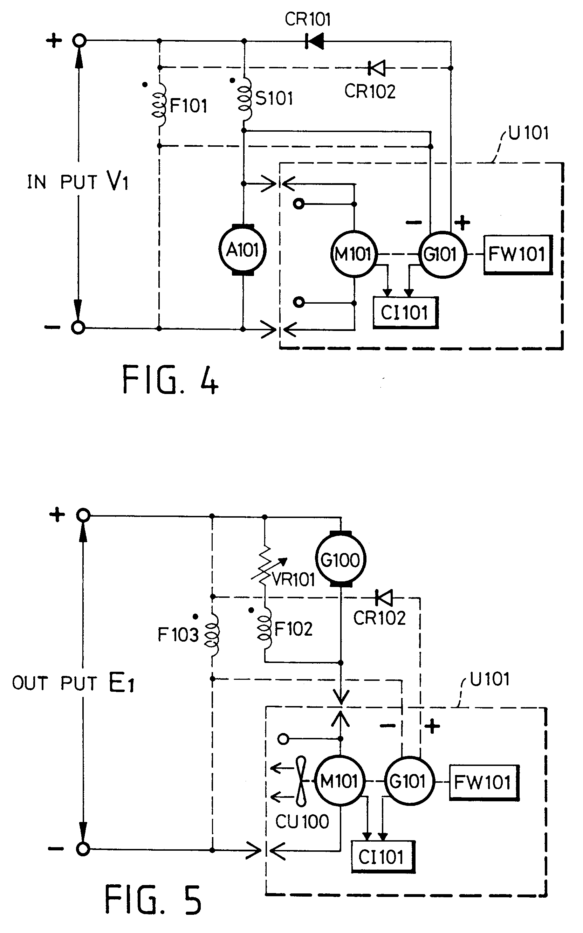

FIG. 4 is a diagram showing an embodiment of circuit for the present dynamic current feedback magnetizing type shunt or series or compound DC motor-generator control circuit in which current-follower motor of feedback unit is parallel connected to the armature of main motor-generator.

FIG. 5 is a diagram showing an embodiment of circuit for the present dynamic current feedback magnetizing type shunt or series or compound DC motor-generator control circuit in which the main motor is a shunt type generator while the follower motor of feedback unit is series with armature of auxiliary generator.

### DETAILED DESCRIPTION OF THE INVENTION

The conventional DC motor-generator set include dynamo motors and generators. In general, dynamo motors have speed control, torsion feedback compensation in accordance with load increase, of which speed control and torsion in accordance with the load increase are most common. Among the generators, the change in driving speed resulting in voltage change or positive/negative feedback of input current against output voltage are most common.

The present dynamic current feedback magnetizing type series or compound DC motor-generator control circuit relates to a new design for the control system for the aforesaid DC motor-generator set, by using cheaper but reliable low power auxiliary motor and generator assembly for controlling the main motor-generator set with greater horsepower. The feature of the present dynamic current feedback magnetizing type series or compound DC motor-generator control circuit lies in good performance, high reliability and cheaper production cost comparing to the conventional magnetism magnified feedback or dynamo and solid magnified element type control system. The principle and system operation of the present dynamic current feedback magnetizing type series or compound DC motor-generator control circuit lies in that, it is driven by the external power source used for running the main motor-generator set, or mechanical rotary power source such as engine, fluid wheel wing or dynamo motor for driving the motor-generator when it is a generator set; when the main motor-generator set comprising aforesaid generator or dynamo motor, it can be a series (or compound) dynamo motor including main motor-generator winding and related main motor-generator armature (and together with its armature or power supply jointly parallel connected to the shunt winding of the main motor-generator armature when compound type is in use), and related mechanical structure such as end casing spindle bearing, etc. When main motor-generator set is motor, it accepts electric power input and gives electric energy output; when main motor-generator set is generator, it accepts mechanic power input and gives electric energy output; the present dynamic current feedback magnetizing type series or compound DC motor-generator control circuit relates to a feedback unit U101 comprising a feedback motor-generator set, the electric energy of motor of the motor-generator set depends on control performance, including the source from the main motor-generator set being driven by armature, or parallel connected to main motor armature or series with a field to employ diode choking for exciting the series or shunt winding of former design. It comprises as FIG. 1, including:
follower motor M101: a series motor or shunt or permanent-magnet type or compound motor, its following electric energy may come from (1) series with the series winding and armature or parallel connected to series winding or armature of the aforesaid main motor-generator, if the follower motor is a series motor (2) its armature parallel connected to series winding and series with the armature, or series with series winding and parallel connected to the armature of the main motor-generator, if it is a shunt or permanent-magnet motor (3) its armature and series winding series with the armature and series winding or parallel connected to the series winding or armature of the main motor-generator, if the follower motor is a compound motor;
auxiliary generator G101: driven by the aforesaid follower type motor M101 for producing relative generating capacity to running speed for exciting the series or shunt field winding of the main motor, and the relation of generating capacity to running speed of main motor-generator may include direct ratio or inverse ratio subject to the wiring relationship between the follower motor and the main motor-generator; such generator may comprise a DC or AC generator and rectifier;
control interface CI101: provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

The principle and application of the present design is described as follows:
As shown in FIG. 2, it is a diagram showing an embodiment of circuit for the present dynamic current feedback magnetizing type series or compound DC motor-generator control circuit in which current-follower motor of feedback unit is series with armature using armature load current as the current for driving the motor, and it is characterized in that:
the main motor-generator set is a series motor including series field winding S101 and armature A101, or a compound motor further including shunt field winding F101 and the said series or shunt winding can accept feedback unit U101 control by virtue of the choking diode CR101 (or CR102);
follower motor M101 of feedback unit U101 is series with the armature A101 of the main motor-generator, if excessive current occurs on the armature of main motor-generator, the follower motor can be parallel connected to the shunt and then jointly series with the armature of the main motor-generator;
auxiliary generator G101 is being driven by the aforesaid follower motor M101 for producing relative generating capacity to running speed to excite the series or shunt field winding of the main motor by virtue of the choking diode CR101 (or CR102), and the relation of generating capacity to running speed of main motor-generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

As shown in FIG. 3, it is a diagram showing an embodiment of circuit for the present dynamic current feedback magnetizing type series or compound DC motor-generator control circuit in which current-follower motor of feedback unit is parallel connected to the series winding of main motor and load current of main motor-generator forming voltage drop as the source of electric energy for driving the motor, and it is characterized in that:
the main motor-generator set is a series motor including series field winding S101 and armature A101, or a compound motor further including shunt winding F101, and the said series or shunt field winding may accept feedback unit U101 control by virtue of the choking diode CR102;
follower motor M101 of feedback unit U101 is parallel connected to the series winding S101 of the main motor-generator, when the main motor-generator passing the greater current by the series winding, a larger voltage drop ES is formed on each side of the series winding to increase end voltage and running speed of follower motor M101 that is parallel connected to the series winding;
auxiliary generator G101 is being driven by the aforesaid follower motor M101 for producing relative generating capacity to running speed to excite the series or shunt winding of the main motor by virtue of choking diode CR102, and the relation of generating capacity to running speed of main motor-generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

As shown in FIG. 4, it is a diagram showing an embodiment of circuit for the present dynamic current feedback magnetizing type series or compound DC motor-generator control circuit in which current-follower motor of feedback unit is parallel connected to the armature of main motor-generator, it is characterized in that:
the main motor-generator set is a series motor including series field winding S101 and armature A101, or a compound motor further including shunt field winding F101, and the said series or shunt winding may accept feedback unit U101 control by virtue of choking diode CR101 (CR102);
follower motor M101 of feedback unit U101 is parallel connected to the armature A101 of the main motor-generator to form that, follower motor driving energy is following the end voltage of main motor-generator armature;
auxiliary generator G101 is being driven by the aforesaid follower motor M101 for producing relative generating capacity to running speed to excite the series or shunt winding of the main motor by virtue of choking diode CR101 (or CR102), and the relation of generating capacity to running speed of main motor-generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

As shown in FIG. 5, it is a diagram showing an embodiment of circuit for the present dynamic current feedback magnetizing type series or compound DC motor-generator control circuit in which follower motor of feedback unit is series with armature of auxiliary generator, and it is characterized in by that:
the main motor-generator set includes self-excited field winding F102 or meanwhile including exciting field winding F103 and generator armature G100, and the said series or shunt winding may accept feedback unit U101 control by virtue of the choking diode CR102;
follower motor M101 of feedback unit U101 is series with the armature, if excessive current occurs on the armature of main generator, the follower motor can be parallel connected to the shunt and then jointly series with the armature of the main motor-generator;
auxiliary generator G101 is being driven by the aforesaid follower motor M101 for producing relative generating capacity to running speed to excite the field winding F103 of the main generator, and the relation of generating capacity to running speed of main generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

The aforesaid auxiliary generator unit may form a feedback relation to the main motor-generator set (consisted of motor or generator), and for real application we may add mounting mechanical flywheel FW101 on the auxiliary unit or parallel connecting capacitance to the output end of the auxiliary generator unit for regulating response relation between with main motor-generator; moreover the embodiments as shown in aforesaid FIGs. 2, 3 and 5, electric energy of follower motor is increasing in accordance with armature current of the main motor-generator to increase the follower motor power and to increase running speed or torsion. We may further use follower motor for driving the cool air pump CU100 of the main motor-generator to form the characteristics in by that, cool flow is being changed depending the current value of main motor-generator armature, and such application can be combined to the original auxiliary motor-generator set or independently comprises follower motor and cool pump assembly.

Referring to aforesaid applications, whatever the main motor-generator is a motor or a generator, we may select necessary feedback control function according to the following relations: (1) to select the follower motor of feedback unit for accepting feedback electric energy from the main motor-generator, including from the armature current, from series winding end voltage, from armature EMF, or multiple feedback units being driven by feedback electric energy from aforesaid various sources, or a multiple feedback electric energy to drive a same feedback unit to form various kinds of following relations between with the main motor-generator; (2) auxiliary generator set is of different choice such as series, shunt and compound type and different characteristics such as current, voltage and output; (3) exciting current of auxiliary generator against the original series or shunt winding may form a polar relation with the original exciting current of the main motor-generator set, either assisted exciting of same polarity or differential exciting of counter polarity; (4) control interface to control the polarity of output current/voltage of feedback unit.

Based on the selection of aforesaid conditions, we may enable the present dynamic current feedback magnetizing type series or compound DC motor-generator control circuit to gain different characteristics with the conventional motor-generator and to provide a choice for engineering purpose.

## Claims

1. A dynamic current feedback mangetizing type series or compound DC motor-generator control circuit relates to a shunt or series or compound motor including at least one current-follower type DC motor that is running at high or low speed subject to the amount of current passing by the armature for driving an auxiliary generator to constitute a feedback unit, and electric energy generated from such auxiliary generator is leading to the series or shunt field of the main motor-generator by virtue of the choking diode for same-polarity assisted excitation or differential excitation with different polarity, and with a control interface to control output voltage or output impedance from the auxiliary generator further for controlling output current and further selecting assisted exciting or differential exciting the series or shunt field winding of aforesaid main motor-generator to appear assisted or differential excitation against the main field; the present dynamic current feedback magnetizing type series or compound DC motor-generator control circuit also being applicable to a generator or dynamo motor mainly being driven by the external power source, including DC power supply (including voltage controllable power source) when the main motor-generator set being a motor, or mechanical rotary power source used for driving the main motor-generator set, such as engine, fluid wheel wing or dynamo motor when the main motor-generator set being a generator; if the aforesaid generator set or dynamo motor set being used as the main motor-generator set, such main motor-generator set being permitted as a series (or compound) dynamo motor including main motor-generator winding and related main motor-generator armature (and together with its armature or power source end to be parallel connected to the shunt winding of main motor-generator armature when compound type in use), and related mechanical structure such as end casing spindle bearing, if the main motor-generator set being a motor for accepting electric power input and giving electric energy output; when main motor-generator being a generator for accepting mechanic power input and giving electric energy output; the present dynamic current feedback magnetizing type series or compound DC motor-generator control circuit relates to a feedback unit U101 comprising a feedback motor-generator set, the electric energy of motor of the motor-generator set depending on control performance, including the source from the main motor-generator set being driven by armature, or parallel connected to main motor armature or series with a field for exciting the series or shunt field winding of main motor-generator, comprising:
follower motor M101: a series motor or shunt or permanent-magnet type or compound motor, its following electric energy being permissibly coming from (1) series with the series winding and armature or parallel connected to series winding or armature of the aforesaid main motor-generator, if the follower motor being a series motor (2) its armature parallel connected to series winding and series with the armature, or series with series winding and parallel connected to the armature of the main motor-generator, if a shunt or permanent-magnet motor in use (3) its armature and series winding series with the armature and series winding or parallel connected to the series winding or armature of the main motor-generator, if a compound motor in use;
auxiliary generator G101: driven by the aforesaid follower type motor M101 for producing relative generating capacity to running speed for exciting the seris or shunt field winding of the main motor, and the relation of generating capacity to running speed of main motor-generator being permissible to include direct ratio or inverse ratio subject to the wiring relationship between the follower motor and the main motor-generator; such generator being permissible to comprise a DC or AC generator and rectifier;
control interface CI101: provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

2. The dynamic current feedback magnetizing type series or compound DC motor-generator control circuit according to claim 1 including: current-follower motor of feedback unit being series with armature and using armature load current as the current for driving the motor and characterized in by that:
the main motor-generator set is a series motor including series field winding S101 and armature A101, or a compound motor further including shunt field winding F101 and the said series or shunt winding can accept feedback unit U101 control by virtue of the choking diode CR101 (or CR102);
follower motor M101 of feedback unit U101 is series with the armature A101 of the main motor-generator, if excessive current occurs on the armature of main motor-generator, the follower motor can be parallel connected to the shunt and then jointly series with the armature of the main motor-generator;
auxiliary generator G101 is being driven by the aforesaid follower motor M101 for producing relative generating capacity to running speed to excite the series or shunt field winding of the main motor by virtue of the choking diode CR101 (or CR102), and the relation of generating capacity to running speed of main motor-generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

3. The dynamic current feedback magnetizing type series or compound DC motor-generator control circuit according to claim 1 including: current-follower motor of feedback unit being parallel connected to the series winding of main motor and load current of main motor-generator forming voltage drop as the source of electric energy for driving the motor and characterized in by that:
the main motor-generator set is a series motor including series field winding S101 and armature A101, or a compound motor further including shunt winding F101, and the said series or shunt field winding may accept feedback unit U101 control by virtue of the choking diode CR102;
follower motor M101 of feedback unit U101 is parallel connected to the series winding S101 of the main motor-generator, when the main motor-generator passing the greater current by the series winding, a larger voltage drop ES is formed on each side of the series winding to increase end voltage and running speed of follower motor M101 that is parallel connected to the series winding;
auxiliary generator G101 is being driven by the aforesaid follower motor M101 for producing relative generating capacity to running speed to excite the series or shunt winding of the main motor by virtue of choking diode CR102, and the relation of generating capacity to running speed of main motor-generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

4. The dynamic current feedback magnetizing type series or compound DC motor-generator control circuit according to claim 1 including: current-follower motor of feedback unit being parallel connected to the armature of main motor-generator and characterized in that:
the main motor-generator set is a series motor including series field winding S101 and armature A101, or a compound motor further including shunt field winding F101, and the said series or shunt winding may accept feedback unit U101 control by virtue of choking diode CR101 (CR102);
follower motor M101 of feedback unit U101 is parallel connected to the armature A101 of the main motor-generator to form that, follower motor driving energy is following the end voltage of main motor-generator armature;
auxiliary generator G101 is being driven by the aforesaid follower motor M101 for producing relative generating capacity to running speed to excite the series or shunt winding of the main motor by virtue of choking diode CR101 (or CR102), and the relation of generating capacity to running speed of main motor-generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

5. The dynamic current feedback magnetizing type series or compound DC motor-generator control circuit according to claim 1 including current-follower motor of feedback unit being series with armature of auxiliary generator and characterized in by that:
the main motor-generator set includes self-excited field winding F102 or meanwhile including exciting field winding F103 and generator armature G100, and the said series or shunt winding may accept feedback unit U101 control by virtue of the choking diode CR102;
follower motor M101 of feedback unit U101 is series with the armature, if excessive current occurs on the armature of main generator, the follower motor can be parallel connected to the shunt and then jointly series with the armature of the main motor-generator;
auxiliary generator G101 is being driven by the aforesaid follower motor M101 for producing relative generating capacity to running speed to excite the field winding F103 of the main generator, and the relation of generating capacity to running speed of main generator may include direct ratio or inverse ratio subject to the wiring relationship between the follower motor and the main motor-generator; such generator may comprise a DC or AC generator and rectifier;
control interface CI101 is provided for connecting the output voltage or current value for controlling the auxiliary generator, including the adjustable impedance series with the armature or field (if available) output end, or linear or switch type driving element series with armature or field (if available) output end, and another end connecting manual or electro-control signal input/output.
the assisted excitation of the said auxiliary generator G101 against the series or shunt field winding of the main motor-generator may be a direct exciting or positively series with a choking diode CR101 (or CR102) to prevent counter flow.

6. The dynamic current feedback magnetizing type series or compound DC motor-generator control circuit according to claim 1, the auxiliary generator unit being permitted to form a feedback relation to the main motor-generator consisted of motor or generator, and to add mounting mechanical flywheel FW101 on the auxiliary unit or parallel connecting capacitance to the output end of the auxiliary generator unit for regulating response relation between with the main motor-generator.

7. The dynamic current feedback magnetizing type series or compound DC motor-generator control circuit according to claim 1 including: the main motor-generator being permissibly either a motor or a generator and necessary feedback control function being accessible according to the following relations: (1) to select the follower motor of feedback unit for accepting feedback electric energy from the main motor-generator, including from the armature current, from series winding end voltage, from armature EMF, or multiple feedback units being driven by feedback electric energy from aforesaid various sources, or a multiple feedback electric energy to drive a same feedback unit to form various kinds of following relations between with the main motor-generator; (2) auxiliary generator set is of different choice such as series, shunt and compound type and different characteristics such as current, voltage and output; (3) exciting current of auxiliary generator against the original series or shunt winding may form a polar relation with the original exciting current of the main motor-generator set, either assisted exciting of same polarity or differential exciting of counter polarity; (4) control interface to control the polarity of output current/voltage of feedback unit.
